(19) Europäisches Patentamt
European Patent Office
Office européen des brevets

(11) Publication number: **0 022 620**
**B1**

(12) **EUROPEAN PATENT SPECIFICATION**

(45) Date of publication of patent specification: **08.12.82**

(51) Int. Cl.³: **C 01 B 33/28**

(21) Application number: **80301960.3**

(22) Date of filing: **11.06.80**

(54) **Aluminophosphorous compound, process for producing same and its use.**

(30) Priority: **03.07.79 GB 7923145**

(43) Date of publication of application:
**21.01.81 Bulletin 81/3**

(45) Publication of the grant of the patent:
**08.12.82 Bulletin 82/49**

(84) Designated Contracting States:
**AT BE CH DE FR GB IT LI NL SE**

(56) References cited:
**DE - A - 2 034 266**
**GB - A - 1 242 741**
**US - A - 3 386 801**

**Breck, DW-Zeolite molecular Sieves; Wiley Interscience, New York 1974, pages 322—328**

**The file contains technical information submitted after the application was filed and not included in this specification**

(73) Proprietor: **Laporte Industries Limited**
**Hanover House 14 Hanover Square**
**London W1R 0BE (GB)**

(72) Inventor: **Dyer, Alan**
**4 Park Road**
**Manchester (GB)**
Inventor: **Araya, Abraham**
**2.b. Dynham Road**
**West Hampstead London (GB)**

(74) Representative: **ffrench-Lynch, Cecil et al,**
**Laporte Industries Ltd., Group Patent Department,**
**P.O. Box 2, Moorfield Road**
**Widnes, Cheshire WA8 OJU (GB)**

**EP 0 022 620 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Aluminophosphorus compound, process for producing same and its use

The present invention provides a range of novel aluminophosphorus compounds having uility "inter alia", as anion exchangers and a method by which they may be prepared.

A wide range of inorganic cation exchangers is known including, for example, natural or synthetic zeolites and natural or synthetic clays and such cation exchangers are widely used in, for example, water treatment. Particularly, aluminophosphorus compounds based on zeolites having cation exchange properties are known. Such compounds are described in DE—A—2034266 and in the book by D. W Breck entitled "Zeolite molecular sieves" published by Wiley Interscience, New York in 1974 at pages 322—328. In DE—A—2034266 zeolites of the following composition, expressed in terms of mole ratios of the oxides, are disclosed:

$$0.2\text{—}1.2\frac{M_2O}{n} \cdot Al_2O_3 \,.\, 1.3\text{—}6.8SiO_2 \,.\, 0.1\text{—}1.5P_2O_5 \,.\, 0\text{—}9H_2O$$

wherein n is the valency of the exchangeable cation M. However, there are presently commercially available no reversible inorganic anion exchange materials.

The aluminophosphorus compounds provided by the present invention are characterised by having a cationic framework of aluminium, phosphorus and oxygen atoms in which there are more atoms of phosphorus than of aluminium and thereby having anion exchange properties.

The aluminophosphorus compounds provided by the present invention may be prepared, also according to the invention, by contacting an aluminous compound; that is a compound containing aluminium combined with oxygen in a framework; (which framework may be, for example, a sheet, a layered or a three dimensional type of framework, and which may contain other atoms for example silicon and which aluminous compound may, for example, be a natural or synthetic zeolite, or a natural or synthetic clay or alumina) with an excess of an ammonium phosphate melt, thereafter dissolving the excess of phosphate used to form the melt in water or in an aqueous solution and recovering the remaining aluminophosphorus compounds.

The phosphate used to form the melt for the treatment of the aluminous compound is, an ammonium phosphate and is, particularly preferably, ammonium dihydrogen orthophosphate ($NH_4H_2PO_4$) which melts at 190°C. The treatment of the aluminous compound is preferably carried out at a temperature at least 20°C above the melting point of the phosphate and, suitably, at a temperature below the decomposition temperature of the phosphate and, preferably but not essentially, at a temperature not more than 100°C particularly preferably not more than 60°C above the said melting point. Suitably, treatment of the aluminous compound with ammonium dihydrogen phosphate may be conducted of from 210°C to 250°C.

A preferred procedure for conducting the treatment of the aluminous compound involves placing a layer of the compound upon a layer of the phosphate in a suitable vessel and heating the vessel so that the compound sinks into the phosphate as it melts. Alternative means of conducting the treatment will be readily apparent to those versed in the conduct of practical chemical operations such as, for example, the expedient of causing a melt of the phosphate to move upwardly into a suitably supported body of the aluminous compound. Preferably, the phosphate is in a weight excess over the aluminous compound, such excess suitably being at least 3-fold, for example at least 5-fold.

The contact between the phosphate melt and the aluminous compound is preferably maintained for a period of time sufficient to allow the formation of the novel compounds of the invention to an appreciable extent, which time is, preferably, at least 5 hours, particularly preferably at least 7 hours but which, more advantageously, is at least 12 hours for example more than 18 hours. It may be found desirable to use a contact time even in excess of this, for example up to 48 or 60 hours to maximise the yield of the desired aluminophosphorus product.

After the treatment of the aluminous compound with the melt, the product mixture is preferably poured into boiling water, or a boiling aqueous solution of a salt, so as to dissolve surplus phosphate and the remaining solid is then separated, for example by centrifugation or filtration.

Amongst zeolites which may be used to form the aluminophosphorus compounds of the present invention are those having the general formula.

$$Na_2O.Al_2O_3.pSiO_2.qH_2O$$

in which q is usually non-zero and in which p can very widely but preferably, has a positive, not necessarily integral, value up to 10. It is recognised that the zeolites may be such that $Na_2O$ in the above general formula is replaced, at least partially, by $K_2O$ $(NH_4)_2O$, CaO or other oxides, or by mixtures of such, or other, oxides. Examples of such suitable zeolites are zeolite A for which the value of p in the above general formula is about 2, zeolite X for which the value of p in the above general formula is

about 2.5, zeolite Y for which the value of p in the above general formula is from about 3 to about 5 and clinoptilolite which is a naturally occuring zeolite in which the value of p in the above general formula is about 10 and in which formula some of the $Na_2O$ is replaced by $K_2O$.

Amongst clays which may be used to form the aluminophosphorus compounds of the present invention are those of the kaolin group, for example kaolinite itself or meta-kaolinite which may be obtained by calcining kaolinite at, for example, 550°C for 1 hour.

During the treatment of the aluminous compound with the melt, the evolution of ammonia gas is observed despite the fact that the phosphate may be stable to decomposition at the temperature used. This ammonia is presumably produced when the phosphate reacts with the aluminous compound to incorporate phosphorus.

When subjected to x-ray powder diffraction investigations the aluminophosphorus compounds provided by the invention tended to show a substantial number of common identifying features together with features which could be attributed to residual quantities of the aluminous compound. For example, the products prepared according to the invention from zeolite A, zeolite X, zeolite Y, kaolinite, meta-kaolinite and alumina all showed a substantial number of at least the more marked of the following d-spacings or of d-spacings not differing substantially therefrom, to an extent which would lead an expert in the interpretation of x-ray powder diffraction patterns to deduce that all of the products showed a common feature not attributable to the starting materials and that that common feature, as judged by reference to published collections of x-ray powder diffraction patterns, was novel. The d-spacings referred to above are as follows.

| d-spacings (A) | Intensity |
|---|---|
| 5.78 | VS |
| 5.25 | W |
| 4.84 | W |
| 4.15 | M |
| 3.90 | S |
| 3.37 | W |
| 3.12 | W |
| 2.94 | VS |
| 2.60 | VW |
| 2.47 | VW |
| 2.42 | W |
| 2.31 | W |
| 2.06 | W |
| 1.94 | M |

VS = very strong
S = strong
M = medium
W = weak
VW = very weak.

Of course, other lines can be identified some of which can sometimes be attributed to, for example, residual quantities of the particular aluminous compound used or to a modified form thereof due, possibly, to the particular process steps used in the manufacture of the aluminophosphorus

compounds. However the x-ray powder diffraction patterns show no other identifiable crystalline substance.

The aluminophosphorus compounds of the invention may, suitably, have a phosphorus to aluminium ratio of from about 1.5 to 3, for example from about 2 to about 2.5. A remarkable constancy has been found in the phosphorus to aluminium ratio which is thought to indicate a particular structural relationship between these elements.

The compounds provided by the invention, where the aluminous compounds contains silica, generally have a substantial silica content. It is not known whether this silica forms part of the framework of the aluminophosphorus compounds by isomorphous substitution for aluminium or whether it does not. It is deduced however, that it may not play an essential part in the compounds of the invention since that product may also be attained from alumina there being no silica present.

Some at least of the compounds of the invention show a content of nitrogen remaining after the evolution thereof which occurs during the preparation of the compounds. Thermal analysis shows a characteristic endotherm between about 500°C and 600°C on the differential scanning calorimetry profile which cannot be explained by a loss of structural or co-ordinated water since such is not shown to be present by infra-red absorption analysis. It may be that the endotherm is due to a deammination reaction consistent with the presence of nitrogen.

The anion exchange properties of the compounds of the invention lead to diverse uses therefor and the present invention further provides a process for at least partially removing anions from an aqueous solution which comprises contacting the aqueous solution containing the anions with an alumino phosphorus compound provided by the invention having anion-exchange properties. Suitably the anions may be halide, for example fluoride anions. It may often be desirable, before the product is used, to make the material as homoanionic as possible by treatment with an aqueous solution containing a particular desired anion.

While we have above referred especially to the anion-exchange capacity of the compounds provided by the invention, it should be noted that they may have an appreciable (although generally not very great) cation-exchange capacity.

The term "anion-exchange" has been used throughout this specification to refer to the concomitant uptake of one anion and the release of another. It is not intended that the term be limiting to any particular mechanism by which this practical effect may be achieved.

In respect of the compounds provided by the present invention the reference above to anion-exchange properties is to be regarded as characterising the new materials, and not to be limiting on the invention to those aspects of the compounds actually in use as anion exchangers. In zeolites, it is known that the quantity and nature of various cations in the channels and cavities of the aluminosilicate framework affects the retention even of neutral molecules in the zeolite and also affects the catalytic properties of the zeolite and the cation-containing zeolites are valuable as molecular sieves and catalysts. Similar applications for the compounds provided by the present invention are envisaged, especially in applications where the hydrophobicity of the materials (affected differently by anions than by cations) is of importance.

The present invention also provides a process for the chromatographic separation of two anions in aqueous solution wherein the chromatographic stationary phase comprises an alumino phosphorus compound provided by the invention.

Chromatographic separation processes may be performed in the usual manner by taking advantage of the difference in affinity of the alumino phosphorus compounds for the anions in question. Following a conventional technique, the aqueous solution may be applied to a column containing the compounds provided by the invention so as to put the ions into a narrow band at one end of the column, and then the band may be transmitted towards the other end of the column, with progressive separation of the band into two or more bands, by application of a suitable eluent. This is, of course, only an example of a possible procedure. It is not necessary that a column should be used; for instance the compounds provided by the invention could be incorporated into a thin layer on a support plate.

The present invention also provides catalysts consisting of or comprising the aluminophosphorus compounds provided by the present invention.

The invention will now be illustrated by the following examples 1 to 10 with reference to Tables I to IV herein and Figures 1 to 4 attached hereto.

Table I shows the x-ray powder diffraction pattern of the zeolite 4A(Q) used in Example 1 and of the aluminophosphorus compound (H) prepared therefrom according to the invention. The symbol "d/Å" is used to denote a particular reflection in angstroms and the symbol "I/Io" its intensity as a %.

Table II shows the analysis by weight, expressed as oxides of the Hector Clinoptilolite used in Example 4(A) and of the purified form thereof produced in the course of that Example (B).

Table III shows the x-ray powder diffraction pattern of the Hector Clinoptilolite used in Example 4(A), of the purified form thereof (B) and of aluminophosphorus compound (L) prepared from (B) according to the invention. The symbols "D/Å" and "I/Io" have the meanings above ascribed to them "Int" denotes "Intensity".

Table IV shows the x-ray powder diffraction patterns of the aluminophosphorus compounds prepared by Examples 4—10. The symbols used are as in Tables I and III.

Figure 1 shows differential thermal analysis (DTA) curves for the zeolite 4A(Q) used in Example 1, the aluminophosphorus compound prepared therefrom (H), the purified clinoptilolite prepared in Example 4(B) and the aluminophosphorus compound prepared therefrom (L). The ordinate is divided into arbitrary units and the abscissa into °C.

Figure 2 shows differential scanning calorimetry (DSC) curves for the same materials (Q), (H), (B) and (L). Again, the ordinate is divided into arbitrary units and the abscissa into °C.

Figure 3 shows the infra-red spectrograph of the materials (Q), (H), (B) and (L). The abscissa is divided into wave numbers expressed in $cm^{-1}$.

Figure 4 shows a plot of the mass of chloride eluted (in micrograms) on the ordinate against time (in minutes) on the abscissa from the aluminophosphorus compound prepared according to Example 2 from pelleted zeolite 4A.

Example 1

*Preparative*

Zeolite 4A powder (sodium form) (Q) as supplied by Laporte Industries Limited of Widnes, England was used as the starting material; A layer of Q was placed on top of nine times its weight of ammonium dihydrogen orthophosphate, and the materials were heated slowly to 230°C. From the time when the ammonium dihydrogen orthophosphate began to melt the mixture was occasionally stirred. A temperature of 230°C was maintained for eight hours. Then the mixture was poured, while still hot, into 20 times its weight of boiling water. After vigorous stirring, the product was centrifuged and the solid thus separated was washed five times with water and dried at 110°C. The product thus obtained will be referred to as H.

*Characterisation and properties of H*

(a) H was analysed by x-ray fluorescence to determine the Si:Al:P ratio, and for comparison the starting material Q was analysed in the same manner. The results were as follows:—

| | Si | : A1 | : P |
|---|---|---|---|
| Q | 1.02 | : 1 | 0 |
| H | 1.78 | : 1 | 2.14 |

(b) H was found, by wet analysis, to contain 7.62 per cent by weight of Si. Wet analysis for Al and P is unfortunately difficult in their mutual presence.

(c) The x-ray powder diffraction patterns of Q and H are compared in Table I. No bulk $NH_4H_2PO_4$ phase (which has strong reflections at 5.32Å and 3.75Å) was detected. There are reflections present having spacings above 5.78Å. These reflections may possibly be attributed to residual quantities of Zeolite 4A or a modified form thereof.

TABLE I

| Q | | H | |
|---|---|---|---|
| d/Å, | I/Io | d/Å, | I/Io |
| 12.08 | 100 | 12.08 | 72 |
| 8.54 | 60 | 8.57 | 39 |
| 7.00 | 40 | 6.32 | 13 |
| 5.46 | 16 | 5.78 | 72 |
| 4.08 | 59 | 5.27 | 30 |
| 3.71 | 70 | 4.89 | 20 |
| 3.40 | 20 | 4.13 | 44 |
| 3.28 | 23 | 3.95 | 81 |
| 2.98 | 55 | 3.38 | 22 |
| 2.75 | 20 | 3.12 | 35 |

TABLE I (contd)

| Q | | H | |
|---|---|---|---|
| d/Å, | I/Io | d/Å, | I/Io |
| 2.62 | 30 | 2.95 | 100 |
| 2.51 | 12 | 2.61 | 15 |
| 2.46 | 11 | 2.49 | 9 |
| 2.37 | 10 | 2.42 | 26 |
| 2.25 | 9 | 2.32 | 22 |
| 2.18 | 11 | 2.19 | 5 |
| 2.05 | 17 | 2.15 | 7 |
| 1.92 | 9 | 2.07 | 9 |
| 1.89 | 9 | 2.02 | 11 |
| 1.83 | 8 | 1.95 | 22 |
| 1.74 | 15 | 1.91 | 7 |
| 1.69 | 10 | 1.85 | 9 |
| 1.60 | 9 | 1.74 | 20 |
| 1.57 | 8 | 1.68 | 10 |
| 1.43 | 5 | 1.60 | 16 |
| 1.40 | 8 | 1.53 | 25 |
| 1.34 | 11 | 1.48 | 19 |
| 1.32 | 7 | 1.35 | 13 |
| 1.29 | 6 | 1.30 | 9 |
| 1.25 | 8 | 1.24 | 14 |
| 1.22 | 5 | 1.22 | 8 |

(d) DTA traces for Q and H are given in Figure 1, and DSC traces in Figure 2.

(e) Infra-red spectra of Q and H are given in Figure 3. It will be seen that Q displays a marked peak at about 1130 $cm^{-1}$.

(f) Water-leaching of H removed 4.7% of the P present. This was demonstrated both by determining phosphate in the water used for leaching and by checking the maximum weight loss on repeated water washing.

(g) H was placed in a tube with an aqueous solution of NgCl of 0.5 mol/litre concentration and the tube was rotated horizontally overnight at 80°C. The uptake of sodium from the solution was 2.8% of the exchangeable sodium content of an equal mass of Q. In a similar experiment with KCl, the number of moles of potassium taken up from the solution was 3.2% of the number of moles of exchangeable sodium in an equal mass of Q.

(h) H had an anion-exchange properties but because of its particle size it was preferred to perform detailed experiments on material made from zeolite 4A pellets (see Example 2).

## Example 2

*Preparative*

The starting material was sodium zeolite 4A pellets as supplied by Laporte Industries of Widnes, England. These pellets contain about 20 weight per cent of a binder in addition to the zeolite itself. The procedure of Example 1 was modified in that a boiling aqueous solution of $NH_4Cl$ of concentration 1 mol/litre was used instead of boiling water, and in that an after-treatment was performed. This after-treatment involved placing the product in a tube with aqueous $NH_4Cl$ solution of concentration 1 mol/litre at 80°C and rotating the tube horizontally overnight. Thereafter, the product was filtered and the residue thus obtained was washed with water and dried at 110°C. This product is referred to as J.

*Characterisation and properties of J*

J (2 g) was washed with water until the washings contained no chloride, and then was placed in a column. The column had an outer diameter of 0.5 cm and the packed length of the column was 10 cm. Then an aqueous solution of NaF of concentration 0.1 mol/litre was passed into the column. The rate of flow was 1 $cm^3$ per 4 min. The total amount of $Cl^-$ eluted is plotted as a function of time (the time zero is arbitrary) in Figure 4.

The experiment shows the presence of exchangeable chloride anions in J.

## Example 3

*Preparation of purified sodium clinoptilolite ("B") from Hector clinoptilolite ("A")*

The Hector clinoptilolite was supplied by the Baroid Division of National Lead (USA) and which according to the suppliers was of 85—95% purity. The analysis of this material (which is referred to as A) is given in Table II and the x-ray powder diffraction pattern is given in Table III. Lines marked in Table III are thought to be due to impurity phases.

A was powdered, refluxed with water to remove soluble impurities; refluxed with aqueous ammonium chloride solution (saturated at room temperature) to remove carbonates; washed with water until chloride-free; treated with an aqueous 1.0 mol/litre solution of NaCl to reduce the concentration of exchangeable cations other than sodium; washed with water until chloride-free; and dried at 100°C in air. The analysis and x-ray powder diffraction pattern of the product, B, are given in Tables II and III.

TABLE II

| | A | B |
|---|---|---|
| $SiO_2$ | 61.10 | 67.22 |
| $Al_2O_3$ | 10.52 | 11.08 |
| $Fe_2O_3$ | 0.91 | 0.78 |
| $TiO_2$ | 0.36 | 0.32 |
| CaO | 3.34 | 0.27 |
| MgO | 0.47 | 0.11 |
| $Na_2O$ | 5.30 | 5.38 |
| $K_2O$ | 1.48 | 0.60 |
| loss at 110°C | 8.36 | 6.17 |
| Additional loss at 900°C | 8.72 | 7.44 |
| TOTAL | 100.56 | 99.37 |

*Preparation of an anion exchanger ("L") from B*

This preparation followed that in Example 1 except that the zeolite starting material was B instead of Q. The product is referred to as "L".

*Characterisation of L*

(a) L was analysed by x-ray fluorescence, and for comparison B was analysed in the same manner. The results were:—

| | Si | | A1 | | P |
|---|---|---|---|---|---|
| B | 5.13 | : | 1 | : | O |
| L | 4.70 | : | 1 | : | 2.40 |

(b) L was found, by wet analysis, to contain 25.5 weight % Si.

(c) The x-ray powder diffraction pattern of L is given in Table III. No bulk $NH_4H_2PO_4$ phase is evident. The reflections above 5.91 angstroms may be due to the presence of residual quantities of clinoptilolite or a modified form thereof.

(d) The DTA traces for B and L are given in Figure 1, and DSC traces in Figure 2.

(e) Water leaching of L removed 4.3% of the P present (the technique was as described under (g) in Example 1).

(f) The experiment described for H on sodium and potassium exchange compared with Q (see Example 1 characterisation section paragraph (h)) was repeated for L compared with B. The percentages were 15% for sodium and 12.4% for potassium.

(g) The product had anion-exchange properties.

TABLE III

| A | | B | | L | |
|---|---|---|---|---|---|
| d/Å, | Int. | d/Å, | I/Io | d/Å, | I/o. |
| 11.4 | w* | 8.70 | 80 | 8.91 | 56 |
| 8.8 | s | 7.80 | 55 | 7.68 | 56 |
| 7.8 | s | 6.81 | 57 | 7.45 | 44 |
| 6.8 | ms | 5.12 | 30 | 5.91 | 62 |
| 6.6 | mw* | 3.95 | 100 | 5.42 | 40 |
| 5.2 | mw* | 3.31 | 80 | 4.94 | 31 |
| 5.1 | ms | 3.14 | 44 | 4.17 | 56 |
| 4.62 | m | 3.09 | 47 | 3.96 | 80 |
| 4.5 | mw* | 2.94 | 56 | 3.81 | 47 |
| 4.35 | mw | 2.76 | 38 | 3.39 | 61 |
| 4.22 | mw* | 2.52 | 12 | 3.12 | 40 |
| 3.95 | vs | 2.42 | 19 | 2.97 | 100 |
| 3.85 | m | 1.94 | 15 | 2.43 | 21 |
| 3.31 | s* | 1.80 | 17 | 2.33 | 17 |
| 3.13 | m | 1.48 | 17 | 2.03 | 16 |
| 3.0 | m | | | 1.97 | 16 |
| 2.94 | s | | | 1.75 | 17 |
| 2.77 | s | | | 1.69 | 11 |

TABLE III (contd)

| A | | B' | | L | |
|---|---|---|---|---|---|
| d/Å, | Int. | d/Å, | I/Io | d/Å, | I/o. |
| 2.70 | m | | | 1.61 | 11 |
| | | | | 1.51 | 17 |
| | | | | 1.48 | 13 |
| | | | | 1.38 | 11 |

vs = very strong
s = strong
ms = medium-strong
m = medium
mw = medium weak
w = weak
vw = very weak

Examples 4—10

A series of preparations of aluminophosphorus compounds was undertaken using the following aluminous compounds as starting materials.

| EXAMPLE | | |
|---|---|---|
| 4 | Zeolite A powder | ($SiO_2$:$Al_2O_3$ = 2:1) Laporte Industries. |
| 5 | Zeolite A pellets | (as Example 4 but with 20% wt binder) Laporte Industries. |
| 6 | Zeolite X powder | ($SiO_2$:$Al_2O_3$ = 2.45:1) Laporte Industries. |
| 7 | Zeolite Y powder | ($SiO_2$:$Al_2O_3$ = 5.08:1) Laporte Industries. |
| 8 | Kaolinite | ("Buca" grade) Freeport Kaolin Company. |
| 9 | Metakaolinite | (The Kaolinite of Example 8 calcined at 550°C for 1 hour). |
| 10 | Alumina | (40—80 mesh), Laporte Industries. |

The following procedure was adopted. Ammonium dihydrogen orthophosphate was introduced into a 3-necked reaction flask which was fitted with a stirrer and an oil filled glass tube containing a thermocouple one neck being left open. The flask was heated to melt the orthophosphate which was stirred vigorously. One tenth, by weight of the orthophosphate, of the appropriate aluminous compound was introduced into the molten orthophosphate through the open flask neck and a temperature of 230°C was maintained in the flask content for 24 hours. In all cases ammonia was evolved. The hot mixture was then poured into 20 times its weight of boiling water which was then stirred and subjected to filtration to remove solids. The solids were washed several times with water and dried at 110°C. On x-ray powder diffraction examination the products of Examples 6 to 10 showed the patterns set out in Table IV below. Only the reflections above 1.5 angstroms are listed. The products of Examples 4 and 5 also showed patterns containing a substantial number of identifying features common with those of the other Examples leading to the conclusion that they also contained a novel aluminophosphorus compound according to the invention.

TABLE IV

| Example 6 | | Example 7 | | Example 8 | |
|---|---|---|---|---|---|
| d/Å | Int | d/Å | Int | d/Å | Int |
| 5.72 | m | 5.70 | w | 5.75 | s |
| 5.25 | vw | 5.20 | vw | 5.28 | vw |
| 4.80 | vw | 4.10 | vw | 4.85 | w |
| 4.18 | vw | 3.86 | w | 4.20 | w |
| 4.10 | w | 3.34 | vw | 4.12 | m |
| 3.89 | m | 2.91 | w | 3.90 | s |
| 3.35 | vw | 2.40 | vw | 3.37 | w |
| 3.10 | vw | 1.93 | vw | 3.11 | vw |
| 3.04 | vw | 1.52 | vw | 3.05 | vw |
| 2.93 | m | | | 2.94 | s |
| 2.64 | vw | | | 2.61 | vw |
| 2.59 | vw | | | 2.42 | vw |
| 2.41 | vw | | | 2.32 | w |
| 2.31 | vw | | | 2.29 | vw |
| 2.14 | vw | | | 2.19 | vw |
| 1.95 | vw | | | 2.15 | w |
| 1.92 | vw | | | 2.07 | vw |
| 1.83 | vw | | | 2.03 | vw |
| 1.73 | vw | | | 1.97 | vw |
| 1.64 | vw | | | 1.95 | w |
| 1.60 | vw | | | 1.90 | vw |
| 1.52 | vw | | | 1.85 | vw |
| | | | | 1.74 | vw |
| | | | | 1.63 | vw |
| | | | | 1.60 | vw |
| | | | | 1.53 | w |

| Example 9 | | Example 10 | | Example 10 | |
|---|---|---|---|---|---|
| d/Å | Int | d/Å | Int | d/Å | Int |
| 3.89 | m | 5.78 | vs | 1.87 | vw |
| 3.35 | vw | 5.25 | m | 1.83 | m |
| 3.11 | vw | 4.83 | w | 1.73 | m |
| 2.92 | m | 4.21 | m | 1.70 | vw |
| 2.59 | vw | 4.12 | s | 1.67 | w |
| 2.41 | vw | 3.89 | vs | 1.64 | vw |
| 2.30 | vw | 3.62 | vw | 1.61 | w |
| 2.13 | vw | 3.35 | m | 1.59 | w |
| 2.02 | vw | 3.11 | m | 1.56 | vw |
| 1.95 | vw | 3.04 | w | 1.55 | vw |
| 1.83 | vw | 2.93 | vs | 1.54 | vw |
| 1.72 | vw | 2.66 | vw | 1.52 | m |
| 1.59 | vw | 2.59 | w | | |
| 1.52 | vw | 2.52 | vw | | |
| | | 2.48 | vw | | |
| | | 2.41 | m | | |
| | | 2.38 | w | | |
| | | 2.32 | m | | |
| | | 2.28 | m | | |
| | | 2.22 | vw | | |
| | | 2.18 | vw | | |
| | | 2.13 | w | | |
| | | 2.11 | vw | | |
| | | 2.06 | w | | |
| | | 2.03 | vw | | |
| | | 2.00 | vw | | |
| | | 1.97 | vw | | |
| | | 1.95 | m | | |
| | | 1.92 | vw | | |
| | | 1.89 | vw | | |

On analysis by x-ray fluorescence the products showed the following Si:Al:P atomic ratios.

| | |
|---|---|
| Example 4 | 0.52:1.0:2.08 |
| Example 6 | 0.50:1.0:2.08 |
| Example 7 | 2.51:1.0:2.24 |
| Example 10 | 0 :1.0:2.02 |

Analysis of the product of Example 10 showed the presence of nitrogen. Infra-red spectrophotometry did not reveal the presence of structural or co-ordinated water. Thermogravimetric analysis showed a weight loss at 500°C—600°C.

The product of Example 5 was examined with reference to its ability to exchange anions. A 4 g sample of the product was placed in a 0.5 cm diameter 20 cm high column and was eluted with 3 litres of 0.1 mol/litre NaF. Testing with Ag $NO_3$ showed the elution of metaphosphate ion ($PO^{-3}$). The column was then washed with distilled water many times. Then the column was eluted with a 0.1 mole/litre NaOH solution and, using a fluoride specific ion electrode (Orion Co), elution of fluoride was observed. Then the column was washed, once more, many times with distilled water and was eluted with a 0.2 mole/litre NaF solution whereupon the elution of hydroxide was found to take place demonstrating an ability for reversible anion exchange.

The product of Example 4 and Example 10 were examined to determine their anion exchange capacity with respect to fluoride and capacities of 3.26 meg/g and 0.8 meg/g were noted.

**Claims**

1. An aluminophosphorus ion exchange compound characterised by having a cationic framework of aluminium, phosphorus and oxygen atoms in which there are more atoms of phosphorus than of aluminium and thereby having anion exchange properties.

2. A compound as claimed in claim 1 wherein the said ratio is from 1.5 to 3.

3. A compound as claimed in claim 2 wherein the said ratio is from 2 to 2.5.

4. A compound as claimed in any one of claims 1 to 3 also containing silica.

5. A compound as claimed in any one of claims 1 to 4 not containing structural or coordinated water as shown by infra-red absorbtion analysis.

6. A process for the preparation of an anion exchanger as claimed in claim 1 characterised by contacting a compound comprising aluminium and oxygen combined in a framework with an excess, over that required to form the aluminophosphorus compound, of an ammonium phosphate melt, thereafter dissolving the excess of phosphate used to form the melt in water or in an aqueous solution and recovering the remaining aluminophosphorus compound.

7. A process as claimed in claim 6 wherein the aluminous compound is a zeolite, a clay or an alumina.

8. A process as claimed in claim 7 wherein the aluminous compound is a zeolite having a $SiO_2$ to $Al_2O_3$ ratio of from 1 to 10.

9. A process as claimed in claim 7 wherein the aluminous compound is a kaolin group clay or a calcined derivative thereof.

10. A process as claimed in any one of claims 6 to 9 wherein the phosphate is ammonium dihydrogen orthophosphate.

11. A process as claimed in any one of claims 6 to 10 wherein the excess is at least 3-fold on a weight basis.

12. A process as claimed in any one of claims 6 to 11 wherein the melt has a temperature not more than 100°C above the melting temperature of the phosphate.

13. A process as claimed in any one of claims 6 to 12 wherein the aluminous compound is contacted with the melt for at least 5 hours.

14. A process as claimed in claim 13 wherein the aluminous compound is contacted with the melt for at least 7 hours.

15. A process for removing anions from an aqueous solution comprising contacting the aqueous solution with an aluminophosphorus compound as claimed in any one of claims 1 to 5.

16. A process as claimed in claim 15 wherein the anions are halide anions or hydroxyl anions.

17. A process for the chromatographic separation of two anions in aqueous solution wherein the chromatographic stationary phase is an aluminophosphorus compound as claimed in any one of claims 1 to 5.

**Patentansprüche**

1. Aluminophosphor-Ionenaustauscherverbindung, dadurch gekennzeichnet, daß sie ein kationisches Netzwerk aus Aluminium-, Phosphor- und Sauerstoff-Atomen aufweist, in dem mehr Phosphor- als Aluminiumatome enthalten sind und das dadurch Anionenaustauschereigenschaften besitzt.

2. Verbindung nach Anspruch 1, dadurch gekennzeichnet, daß das Verhältnis 1,5 bis 3 beträgt.

3. Verbindung nach Anspruch 2, dadurch gekennzeichnet, daß das Verhältnis 2 bis 2,5 beträgt.

4. Verbindung nach einem der Ansprüche 1 bis 3, dadurch gekennzeichnet, daß sie zusätzlich Siliciumdioxid enthält.

5. Verbindung nach einem der Ansprüche 1 bis 4, dadurch gekennzeichnet, daß sie entsprechend der Infrarotabsorptionsanalyse kein Struktur- oder Koordinations-Wasser enthält.

6. Verfahren zur Herstellung eines Ionenaustauschers nach Anspruch 1, dadurch gekennzeichnet, daß man einen Verbindung, die Aluminium und Sauerstoff in einem Netzwerk kombiniert enthält, mit einem Überschuß über die zur Bildung der Aluminophosphorverbindung notwendige Menge einer Ammoniumphosphatschmelze in Kontakt bringt, anschließend den Überschuß des zur Bildung des Schmelze verwendeten Phosphats in Wasser oder in einer wässrigen Lösung löst und die verbleibende Aluminophosphorverbindung gewinnt.

7. Verfahren nach Anspruch 6, dadurch gekennzeichnet, daß die aluminiumhaltige Verbindung ein Zeolith, ein Ton oder ein Aluminiumoxid ist.

8. Verfahren nach Anspruch 7, dadurch gekennzeichnet, daß die aluminiumhaltige Verbindung ein Zeolith mit einem $SiO_2/Al_2O_3$-Verhältnis von 1 bis 10 ist.

9. Verfahren nach Anspruch 7, dadurch gekennzeichnet, daß die aluminiumhaltige Verbindung ein Ton aus der Gruppe der Kaoline oder ein calciniertes Derivat davon ist.

10. Verfahren nach einem der Ansprüche 6 bis 9, dadurch gekennzeichnet, daß das Phosphat Ammoniumdihydrogenorthophosphat ist.

11. Verfahren nach einem der Ansprüche 6 bis 10, dadurch gekennzeichnet, daß der Überschuß ein mindestens dreifacher, bezogen auf das Gewicht ist.

12. Verfahren nach einem der Ansprüche 6 bis 11, dadurch gekennzeichnet, daß die Schmelze eine Temperatur von nicht mehr als 100°C oberhalb der Schmelztemperatur des Phosphats besitzt.

13. Verfahren nach einem der Ansprüche 6 bis 12, dadurch gekennzeichnet, daß die aluminiumhaltige Verbindung während mindestens fünf Stunden mit der Schmelze in Kontakt gebracht wird.

14. Verfahren nach Anspruch 13, dadurch gekennzeichnet, daß die aluminiumhaltige Verbindung während mindestens sieben Stunden mit der Schmelze in Kontakt gebracht wird.

15. Verfahren zur Abtrennung von Anionen aus einer wässrigen Lösung, dadurch gekennzeichnet, daß man die wässrige Lösung mit einer Aluminiumphosphorverbindung nach einem der Ansprüche 1 bis 5 in Kontakt bringt.

16. Verfahren nach Anspruch 15, dadurch gekennzeichnet, daß die Anionen Halogenidanionen oder Hydroxylanionen sind.

17. Verfahren zur chromatographischen Trennung von zwei Anionen in wässriger Lösung, dadurch gekennzeichnet, daß man als chromatographische stationäre Phase eine Aluminophosphorverbindung nach einem der Ansprüche 1 bis 5 einsetzt.

**Revendications**

1. Composé d'aluminium et de phosphore échangeur d'ions caractérisé en ce qu'il a une structure cationique à base d'atomes d'aluminium, de phosphore et d'oxygène, structure dans laquelle il y a plus d'atomes de phosphore que d'aluminium et en ce qu'il a de ce fait des propriétés d'échangeurs d'anions.

2. Composé suivant la revendication 1 caractérisé en ce que ledit rapport est compris entre 1,5 et 3.

3. Composé suivant la revendication 2 caractérisé en ce que le rapport est compris entre 2 et 2,5.

4. Composé suivant l'une quelconque des revendications 1 à 3 caractérisé en ce qu'il contient également de la silice.

5. Composé suivant l'une quelconque des revendications 1 à 4 caractérisé en ce qu'il ne contient pas d'eau structurelle ou coordonnée comme révélé par une analyse par absorption infra rouge.

6. Procédé de préparation d'un échangeur d'anions suivant la revendication 1 caractérisé par la mise en contact d'un composé contenant de l'aluminium combiné avec de l'oxygène dans une structure avec un excès d'un phosphate d'ammonium fondu supérieur à celui qui est nécessaire pour former le composé d'aluminium et de phosphore, suivie d'une dissolution ultérieure de l'excès de phosphate utilisé pour former un bain fondu dans de l'eau ou dans une solution aqueuse et de la séparation des composés d'aluminium et de phosphore restants.

7. Procédé suivant la revendication 6 caractérisé en ce que le composé alumineux consiste en une zéolite, une argile ou de l'alumine.

8. Procédé suivant la revendication 7 caractérisé en ce que le composé alumineux consiste en une zéolite ayant un rapport $SiO_2/Al_2O_3$ compris entre 1 et 10.

9. Procédé suivant la revendication 7 caractérisé en ce que le composé alumineux consiste en une argile du groupe kaolin ou un dérivé calciné de celle-ci.

10. Procédé suivant l'une quelconque des revendications 6 à 9 caractérisé en ce que le phosphate consiste en un dihydrogénoorthophosphate d'ammonium.

11. Procédé suivant l'une quelconque des revendications 6 à 10 caractérisé en ce que l'excès est

au moins triple par rapport au poids.

12. Procédé suivant l'une quelconque des revendications 6 à 11 caractérisé en ce que le bain fondu a une température qui ne dépasse pas ledit point de fusion du phosphate de plus de 100°C.

13. Procédé suivant l'une quelconque des revendications 6 à 12 caractérisé en ce que le composé alumineux est mis encontact avec le bain fondu pendant au moins 5 heures.

14. Procédé suivant la revendication 13 caractérisé en ce que le composé alumineux est mis en contact avec le bain fondu pendant au moins 7 heures.

15. Procédé pour éliminer les anions d'une solution aqueuse caractérisé en ce qu'il comporte la mise en contact de la solution aqueuse avec un composé d'aluminium et de phosphore comme celui revendiqué dans l'une quelconque des revendications 1 à 5.

16. Procédé suivant la revendication 15 caractérisé en ce que les anions sont des anions d'halogénure ou hydroxyles.

17. Procédé de séparation chromatographique de deux anions dans une solution aqueuse caractérisé en ce que la phase chromatographique stationnaire est un composé d'aluminium et de phosphore suivant l'une des revendications 1 à 5.

Fig.1.

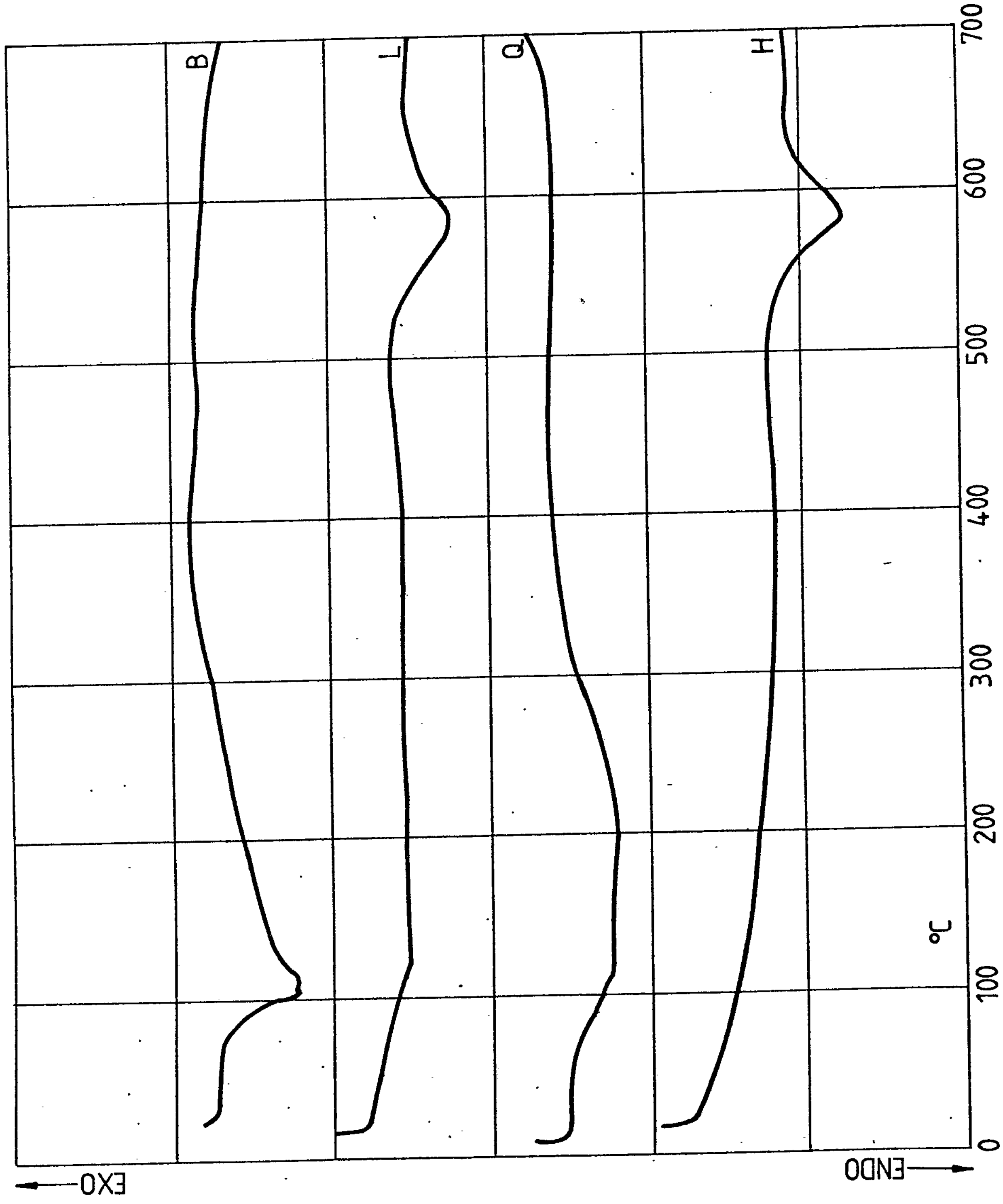

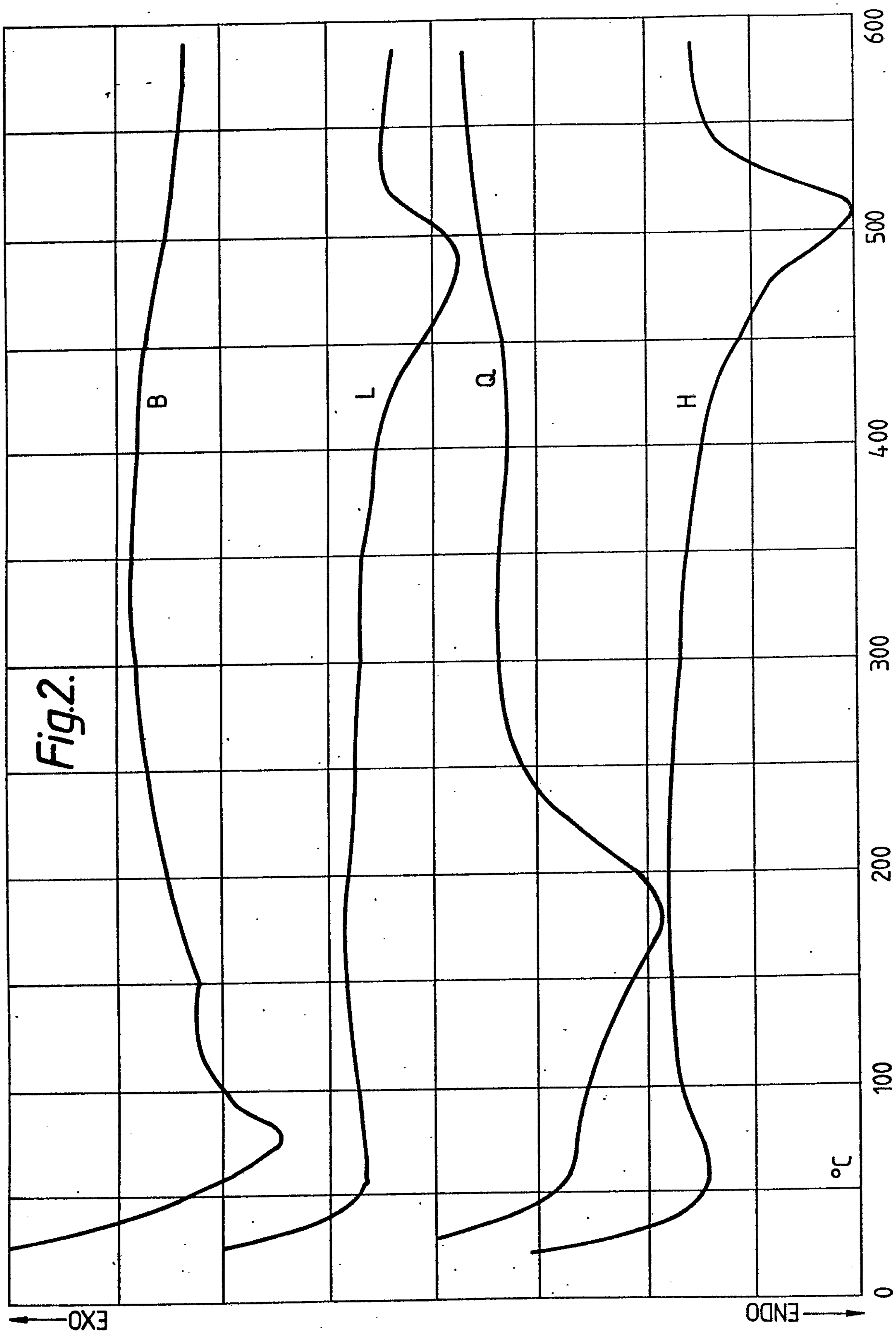


Fig.2.

Fig.3.

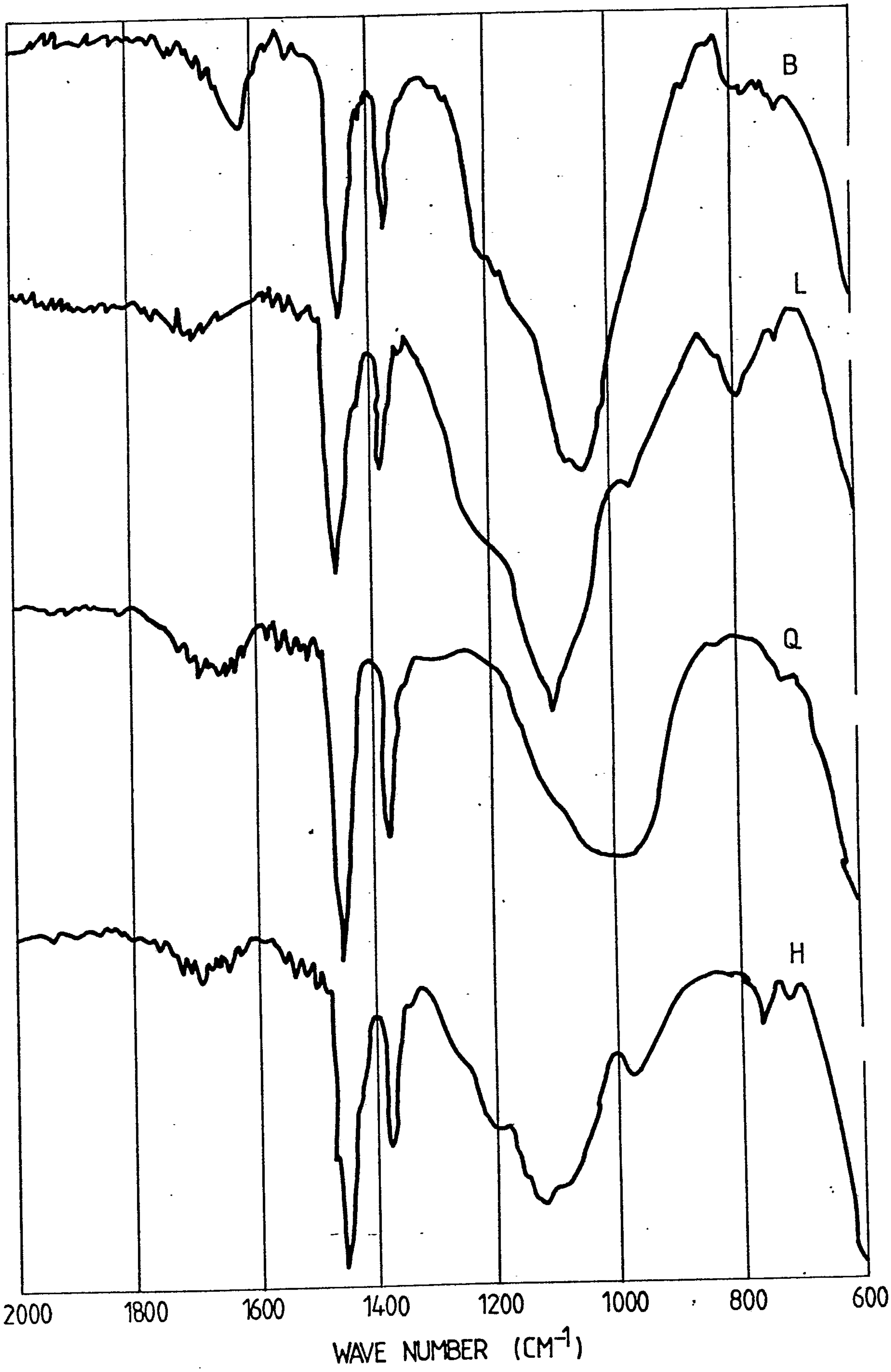

Fig.4.

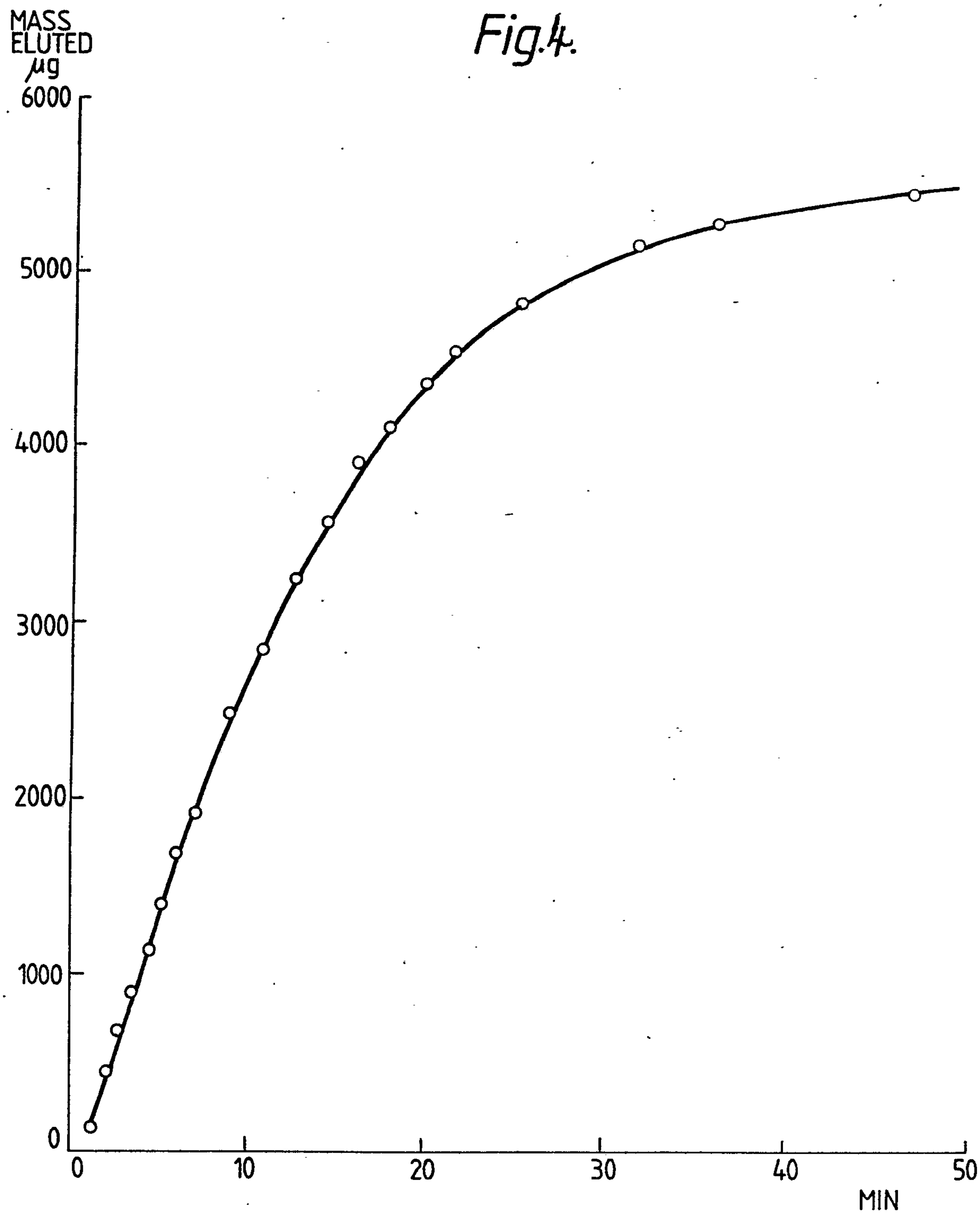
MASS ELUTED µg
6000
5000
4000
3000
2000
1000
0
0
10
20
30
40
50
MIN